# EUROPEAN PATENT SPECIFICATION

(11) **EP 0 959 041 B1**
(45) Date of publication and mention of the grant of the patent: **03.03.2004**
(21) Application number: 97921583.7
(22) Date of filing: 14.05.1997
(51) Int. Cl.: C01B 33/143

(54) **METHOD FOR PREPARING SPONGY SILICA PARTICLES**
VERFAHREN ZU HERSTELLUNG SCHWAMMARTIGER KIESELSÄURETEILCHEN
PROCEDE POUR PREPARATION DE SILICE SPONGIEUSE

(30) Priority: 14.05.1996 CN 96104972
(43) Date of publication of application: 24.11.1999
(73) Proprietor: Wang, Chengyuan, Beijing 100036 (CN)
(72) Inventor: Wang, Chengyuan, Beijing 100036 (CN)
(74) Representative: Liesegang, Roland, Dr.-Ing.
(86) International application number: PCT/CN1997/000047
(87) International publication number: WO 1997/043213

(56) References cited:
- CN-A- 1 114 832
- CN-A- 1 114 833
- CN-A- 1 128 731
- US-A- 3 857 925
- US-A- 3 928 540

## Description

### FIELD OF TECHNOLOGY

The invention relates to a method for preparing SPONGE-LIKE silica particles.

### BACKGROUND OF TECHNOLOGY

Silica (SiO₂) is usually used as reinforcing filler due to its indissolubility in water and acid, chemical stability, resistance to high temperature, and good insulation to electricity. Traditionally, silica is prepared by a precipitation method, wherein neutralizing reaction is carried out with hydrochloric acid and sodium silicate at high temperature, and then spherical silica is obtained through further aging, filtering, washing and drying. However, the spherical silica made by this method has low purity, small specific surface area and large particle size, which is not satisfactory for use in rubber articles as a reinforcing agent. Another method for preparing silica is a vaporizing method, wherein silicon tetrachloride (SiCl₄) is used as a raw material and then a spherical silica is obtained through the procedures of thermal cracking, aggregation and de-acidification. Although the vaporizing method can produce silica with small particle size, it has strict requirement with the processes with high costs, and brings about serious environmental pollution.

US 3,857,925 describes the preparation of reinforcing amorphous pulverulent dry silica. The silica is described as particularly useful for reinforcing rubber. Furthermore, a method for the production of the amorphous pulverulent dry silica is disclosed, in which the silica is precipitated using an acid. US 3,857,925 does not disclose or propose the use of an acid in its atomized form for the precipitation.

It is demanded to develop a method for preparing silica in a simple and inexpensive manner which brings about little environmental pollution, wherein the silica prepared by this method has good activity, adsorption rate and dispersibility, large specific surface area with many micropores inside.

### SUMMARY OF THE INVENTION

An objective of the invention is to provide a method for preparing a sponge-like silica.

The other objectives of the invention are embodied in the following detailed description.

According to this invention, there is provided a process for preparing the sponge-like silica comprising the steps:
A> reacting mineral acid with sodium silicate to conduct neutralizing reaction so as to form silica sol,
B> mixing said silica sol with sodium silicate,
C> treating the mixture from the step B with mineral acid to form silica suspension, wherein the mineral acid is added in an atomized form,
D> washing said silica suspension with water,
E> drying the washed product to yield the sponge-like silica.

### BRIEF INTRODUCTION OF THE DRAWINGS

Fig.1 SEM graph of sponge-like silica prepared by this invention (X1,000,000 times).
Fig 2 SEM graph of spherical silica prepared by Bayer Corporation of Germany (100,000 times)

### DETAILED DESCRIPTION OF THE INVENTION

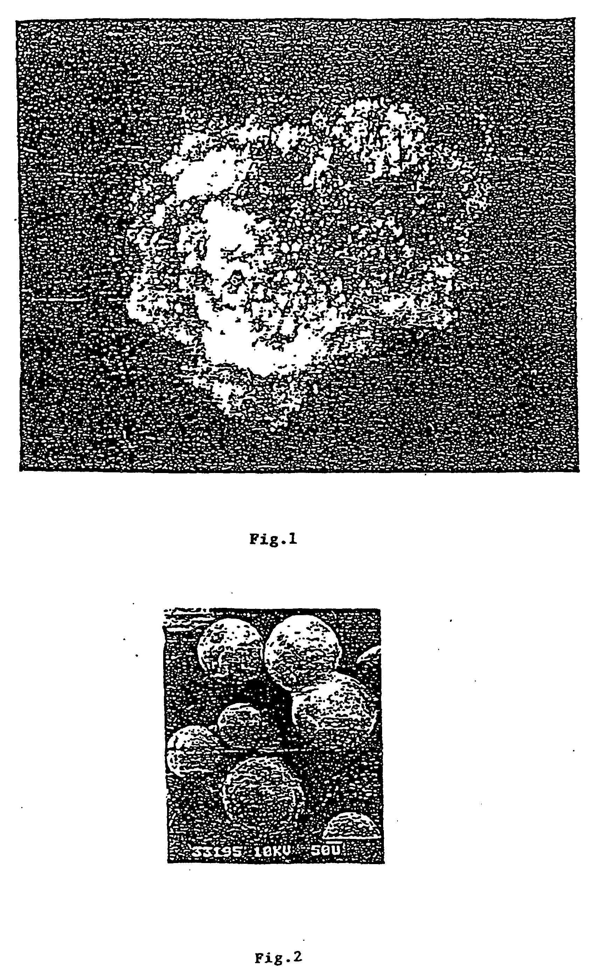

Through a long period of profound study, the sponge-like silica is prepared. This sponge-like silica is different from the one produced by a traditional process. It is seen from Figure 1 that the silica particles of the invention are sponge-like under electron microscope of 1,000,000 times while the silica produced by conventional method is spherical (Fig.2).

According to the invention, there is provided a method for making a sponge-like silica, which comprises the steps:
A> reacting mineral acid with sodium silicate to conduct neutralizing reaction so as to form silica sol at normal temperature and pressure, wherein the reaction time is from about 1.5 hours to 6 hours. The neutralizing reaction can be carried out with stirring first, and then the reaction products are kept in static to form silica sol. The total reaction time including the procedures of stirring and static is about 6-48 hours. The proportion of mineral acid to sodium silicate is about 1.2∼2.5:1∼1.5 (by volume);
B> mixing said silica sol with sodium silicate at normal temperature and pressure, wherein the proportion of silica sol to sodium silicate is about 1∼10 : 5~20 (by volume );
C> treating said mixture from the step B with mineral acid to form silica suspension, wherein the proportion of the mineral acid to the mixture is about 15∼30:60∼300 (by volume ) . The step of acid treatment is carried out with stirring at normal pressures and a temperature of about 35~100 °C, preferably 40∼80°C. The mineral acid is added in an atomized form. The time of acid treatment is about 40 minutes ∼120 minutes. The mineral acid may be the same as or different from that of step A. The concentration of the mineral acid may or may be the same as that of step A;
D> washing said silica suspension with water to obtain wet silica;
E> drying said wet silica. The process of drying can be carried out by conventional methods, such as spray drying, centrifuge drying and pressure drying etc., preferably spray drying.

In this invention, the mineral acid can be hydrochloric acid, sulfuric acid, phosphoric acid and nitric acid etc., preferably sulfuric acid. The concentrations of mineral acids are about 5~60 °Be, preferably 15~55 °Be. The concentration of sodium silicate is about 5~40 °Be. The stirring speed is about 15~500 RPM.

The sponge-like silica prepared by this invention has the following norms after analyzing:

| | |
|---|---|
| SiO₂ (dry basis) | 92∼98.5% (by weight) |
| H₂O Content | <7% |
| Loss of Igniting | 5∼8% |
| Specific Surface Area | 260∼300m²/g |
| pH | 6.5∼7.5 |
| Specific gravity | 0.1959 |
| primary particle size | 99% ≤ 10 µm, 60% ≤ 5 µm |
| Refractive index | 1.45 |
| Absorption of DBP | 2∼3.5cm³/g |
| NaCl | 0.1∼0.07% |
| Fe | 0.02%∼0.08% |

The silica prepared in this invention has good activity, adsorption and dispersibility, large specific surface area and much microvoid inside. It also has strong affinity for all kinds of rubbers. The silica has strong effect of reinforcement due to the cross-linking action of silanol group on its surface during rubber's vulcanization. The silica can be used in tires as reinforcing agent, filling agent, wear-resisting agent and age-resisting agent and can increase life of tires by 6-8 times. It is also widely used in many fields, such as electric cable and protective coat of wire, optical conductive fiber, paint, printing ink, paper and plastics etc.

The sponge-like silica is used in rubbers as a reinforcing agent.

This invention is further described with the following examples. However, it does not mean any restriction to the scope of the invention.

### EXAMPLE 1

1000 liter of aqueous solution containing 5% sulfuric acid was added into 150 liter of sodium silicate solution (25% SiO₂) to react for one hour to form a silica sol. Into a reaction vessel were added 25 parts by volume of said silica sol, then 50 parts by volume of water, 8 parts by volume of sodium silicate solution (25% SiO₂) and 7 parts by volume of aqueous solution containing 15% sulfuric acid in an atomized form. The mixture thus formed was subject to treatment with stirring in a speed of 150 RPM for 2 hours to obtain silica suspension at normal pressure and temperature of 60 °C to obtain the silica suspension. The resulting silica suspension was washed with 50 times water and then subject to drying treatment by spraying drying at the temperature of 500 °C to obtain the sponge-like silica. The properties of the sponge-like silica were determined by the Center of State Geology Testing and compared with the Chinese National Standard (GB-10517-10530-89). The results are as follows:

| Testing Items | Chinese National Standards (Class A) | Results of the Invention Specific |
|---|---|---|
| surface area (m²/g) | ≥ 190 | 269 |
| Content of SiO₂(%) | ≥ 90 | 94.48 |
| Color | equal to or better than, standard sample | better than standard sample |
| Tailings 45 µm % | ≤ 0.5 | 0.05 |
| Loss of heating (%) | 4.0∼8.0 | 4.28 |
| Loss of igniting (%) | ≤ 7.0 | 3.78 |
| pH (10%of aqueous suspension) | 5.0∼8.0 | 7.2 |
| Cu in total (mg/kg) | ≤ 30 | ≤ 1 |
| Mn in total(mg/kg) | ≤ 50 | 4 |
| Fe in total(mg/kg) | ≤ 1000 | 888 |
| Absorption of DBP (cm³/g) | 2.0∼3.5 | 2.8 |
| Tensile strength (Mpa) | | 31.2 |
| Elongation rate (%) at break | | 796 |
| Tensile stress (Mpa) at 500% elongation | | 9.5 |

The product meets the requirements of the Chinese National State Standards of Class A (GB10517-89) and Chemistry Industry Standards (HG/T2197-91). All the norms reach the standard.

### EXAMPLE 2

1000 liter of aqueous solution containing 6% hydrochloric acid were added into 160 liter of sodium silicate aqueous solution (20% SiO₂) to react for one hour to form a silica sol. 20 parts by volume of said silica sol was added into a reaction vessel, then 60 parts by volume of water, 8 parts by volume of sodium silicate solution containing 30% silica and 7 parts by volume of aqueous solution containing 15% hydrochloric acid in an atomized form were added. The mixture thus formed was treated at the temperature of 70 °C and normal pressure with stirring in a speed of 350 RPM for 2.5 hours to obtain a silica suspension. The resulting silica suspension was washed with 40 times of water and then subject to drying by spray drying at a temperature of 500 °C to obtain the product which was similar to that of example 1.

Specific surface area: 300 m²/g; 94 % of SiO2; primary particle sizes (not mechanically ground): 99%≤ 10 µ m, 60%≤ 5 µ m, 23%≤ 1 µ m:
pH = 7.0; Fe: 600(ppm); H₂O content:
5 (%); Absorption value of DBP: 2.0~3.0 cm³/g.

## Claims

1. A process for the manufacture of silica, which comprises the following steps:
(A) adding an aqueous solution of δ = 1.12 - 1.62 (15°-55° Be) mineral acid into δ = 1.12 - 1.62 (5°-40° Be) sodium silicate at a ratio of 1.2 - 2.5 : 1 - 1.5 of mineral acid : sodium silicate to conduct neutralizing reaction for 6 - 48 hours so as to form a silica sol;
(B) mixing the resulting silica sol from the step (A) with sodium silicate at a ratio of 1-10 : 5-20 (by volume) at a normal temperature and pressure;
(C) treating said mixture from the step (B) with mineral acid at a ratio of 15 - 30 : 60 - 300 (by volume) of mineral acid : said mixture at a temperature of 40-80°C to form a silica suspension, wherein mineral acid is added in an atomized form;
(D) washing said silica suspension with water to obtain wet silica; and
(E) drying said wet silica to obtain the desired product.

2. The process of claim 1, wherein stirring speed is 15-500 RPM during addition of mineral acid in an atomized form.

3. The process of claim 2, wherein mineral acid is added for 40-120 minutes in step (C).

4. The process of claim 3, wherein the mineral acid is sulfuric acid.

## Patentansprüche

1. Verfahren zur Herstellung von Siliciumdioxid, das die folgenden Schritte umfaßt:
(A) Zugeben einer wäßrigen Lösung einer Mineralsäure mit δ = 1,12 - 1,62 (15°-55° Be) zu Natriumsilicat mit δ = 1,12 - 1,62 (5°-40° Be) in einem Verhältnis von 1,2 - 2,5 : 1 - 1,5 von Mineralsäure : Natriumsilicat, um eine Neutralisierungsreaktion für 6 - 48 Stunden durchzuführen, um ein Kieselsol zu bilden;
(B) Mischen des resultierenden Kieselsols aus Schritt (A) mit Natriumsilicat in einem Verhältnis von 1 - 10 : 5 - 20 (bezogen auf das Volumen) bei einer normalen Temperatur und Druck;
(C) Behandeln der Mischung aus Schritt (B) mit Mineralsäure in einem Verhältnis von 15 - 30 : 60 - 300 (bezogen auf das Volumen) von Mineralsäure : Mischung bei einer Temperatur von 40-80°C, um eine Siliciumdioxidsuspension zu bilden, wobei die Mineralsäure in einer atomisierten Form zugeben wird;
(D) Waschen der Siliciumdioxidsuspension mit Wasser, um nasses Siliciumdioxid zu erhalten; und
(E) Trocknen des nassen Siliciumdioxids, um das erwünschte Produkt zu erhalten.

2. Verfahren nach Anspruch 1, wobei die Rührgeschwindigkeit 15-500 UPM während der Zugabe der Mineralsäure in einer atomisierten Form beträgt.

3. Verfahren nach Anspruch 2, wobei die Mineralsäure über 40-120 Minuten in Schritt (C) zugegeben wird.

4. Verfahren nach Anspruch 3, wobei die Mineralsäure Schwefelsäure ist.

## Revendications

1. Procédé pour la fabrication de silice qui comprend les étapes suivantes :
(A) l'addition d'une solution aqueuse de δ = 1,12-1,62 (15°-55° Be) d'acide minéral dans δ = 1,12-1,62 (5°-40° Be) de silicate de sodium à un rapport de 1,2-2,5:1-1,5 d'acide minéral:silicate de sodium pour réaliser une réaction de neutralisation pendant 6-48 h afin de former un sol de silice ;
(B) le mélange du sol de silice résultant de l'étape (A) avec du silicate de sodium à un rapport de 1-10:5-20 (en volume) à température et pression ambiantes ;
(C) le traitement dudit mélange de l'étape (B) avec de l'acide minéral à un rapport de 15-30:60-300 (en volume) d'acide minéral:ledit mélange à une température de 40-80°C pour former une suspension de silice, dans lequel l'acide minéral est ajouté dans une forme atomisée ;
(D) le lavage de ladite suspension de silice avec de l'eau pour obtenir de la silice humide ; et
(E) le séchage de ladite silice humide pour obtenir le produit souhaité.

2. Procédé selon la revendication 1, dans lequel la vitesse d'agitation est de 15-500 tr/min pendant l'addition d'acide minéral dans une forme atomisée.

3. Procédé selon la revendication 2, dans lequel l'acide minéral est ajouté pendant 40-120 min dans l'étape (C).

4. Procédé selon la revendication 3, dans lequel l'acide minéral est de l'acide sulfurique.
